# EUROPEAN PATENT APPLICATION

(11) **EP 4 832 344 A1**
(43) Date of publication of application: **28.10.2026**
(21) Application number: 24929859.7
(22) Date of filing: 18.07.2024
(51) Int. Cl.: H02S 40/32, H02S 50/00, G06F 3/0486, G06V 10/10, G06V 30/10

(54) **METHOD AND APPARATUS FOR AUTOMATICALLY MAPPING MLPE DEVICES OF PHOTOVOLTAIC MODULE**

(30) Priority: 11.03.2024 KR 20240033803
(71) Applicant: Hanwha Solutions Corporation, Jung-gu Seoul 04541 (KR)
(72) Inventor: BAEK, Eun Je, Seoul 04541 (KR); PARK, Jin Woo, Seoul 04541 (KR)
(74) Representative: Mooser, Sebastian Thomas
(86) International application number: PCT/KR2024/010344
(87) International publication number: WO 2025/192797

(57) **Abstract**

The present disclosure relates to a method and device for automatically mapping an inverter of a photovoltaic module. According to an embodiment, a method, performed by a processor of a device for automatically mapping an inverter of a photovoltaic module, of automatically mapping an inverter of a photovoltaic module may include generating a guide template including an arrangement plan for a photovoltaic system to output an optimal amount of power generation, based on at least one of environmental conditions of a site where the photovoltaic system is to be installed, or performance of the photovoltaic system, based on receiving completion of installation of the photovoltaic system in correspondence to the guide template, receiving a list of identification information of module-level power electronics (MLPE) devices corresponding to a plurality of photovoltaic modules included in the photovoltaic system, respectively, receiving a template image obtained by photographing a result of attaching, to the guide template, first codes separated from the MLPE devices, obtaining, from the template image, location information and identification information of the MLPE devices corresponding to the first codes, and generating a first layout drawing of the MLPE devices, based on the location information and the identification information.

## Description

### Technical Field

The present disclosure relates to a method and device for automatically mapping a module-level power electronics (MLPE) device of a photovoltaic module.

### Background Art

Recently, as interest in eco-friendly energy technologies has grown, the installation of solar power generation systems for energy generation using solar energy has been increasing. Solar power generation systems collect solar energy through photovoltaic modules to generate electricity, which is then supplied to a domestic power grid for use as residential electricity or stored in batteries for later use. Generating electricity through solar power generation systems is gaining attention recently as it is environmentally friendly and may reduce electricity bills in the long term.

In general, a solar power generation system is equipped with a plurality of photovoltaic (PV) modules, each of which includes a module-level power electronics (MLPE) device for optimizing the amount of power generation and managing power conversion. After installing a plurality of photovoltaic modules, the installer needs to map them to a layout drawing. At this time, the installer needs to manually scan codes containing identification information of photovoltaic modules or MLPE devices one by one, and then manually match the identification information of the photovoltaic modules or microinverters with information about locations where they are arranged, which is cumbersome, and thus, various approaches have been researched to simplify this process.

The above-mentioned background art is technical information possessed by the inventor for the derivation of the present disclosure or acquired during the derivation of the present disclosure, and cannot necessarily be said to be a known technique disclosed to the general public prior to the filing of the present disclosure.

Prior art document: Korean Patent Publication No. 10-1319531 (Published on October 13, 2013)

### Disclosure

### Technical Problem

The present disclosure is to provide a method of recognizing identification information of a plurality of photovoltaic modules or module-level power electronics (MLPE) devices, and easily managing the information.

The present disclosure is to provide a layout drawing of a plurality of photovoltaic modules including MLPE devices, for easily collecting and managing location information of the photovoltaic modules.

The present disclosure is to generate a guide template that includes an arrangement plan for a plurality of photovoltaic modules or MLPE devices to output an optimal amount of power generation, so as to minimize work mistakes by the installer and support efficient installation.

The present disclosure is to generate a more accurate mapping result in which in-situ conditions is actually reflected, by obtaining direction information from an image including a state in which a plurality of photovoltaic modules are installed, and rotating a layout drawing.

The present disclosure is to optimize a layout drawing while maintaining visual consistency by rotating, in correspondence to direction information, a layout drawing excluding text containing identification information to generate a modified layout drawing.

Technical objectives of the present disclosure are not limited to the foregoing, and other unmentioned objectives or advantages of the present disclosure would be understood from the following description and be more clearly understood from the embodiments of the present disclosure. In addition, it would be appreciated that the objectives and advantages of the present disclosure may be implemented by means provided in the claims and a combination thereof.

### Technical Solution

According to an embodiment, a device for automatically mapping an inverter of a photovoltaic module may include at least one processor, and at least one memory, wherein the at least one processor is configured to generate a guide template including an arrangement plan for a photovoltaic system to output an optimal amount of power generation, based on at least one of environmental conditions of a site where the photovoltaic system is to be installed, or performance of the photovoltaic system, based on receiving completion of installation of the photovoltaic system in correspondence to the guide template, receive a list of identification information of module-level power electronics (MLPE) devices corresponding to a plurality of photovoltaic modules included in the photovoltaic system, respectively, receive a template image including a result of attaching, to the guide template, first codes separated from the MLPE devices, obtain, from the template image, location information and identification information of the MLPE devices corresponding to the first codes, and generate a first layout drawing of the MLPE devices, based on the location information and the identification information.

According to an embodiment, a method, performed by a processor of a device for automatically mapping an inverter of a photovoltaic module, of automatically mapping an inverter of a photovoltaic module may include generating a guide template including an arrangement plan for a photovoltaic system to output an optimal amount of power generation, based on at least one of environmental conditions of a site where the photovoltaic system is to be installed, or performance of the photovoltaic system, based on receiving completion of installation of the photovoltaic system in correspondence to the guide template, receiving a list of identification information of MLPE devices corresponding to a plurality of photovoltaic modules included in the photovoltaic system, respectively, receiving a template image obtained by photographing a result of attaching, to the guide template, first codes separated from the MLPE devices, obtaining, from the template image, location information and identification information of the MLPE devices corresponding to the first codes, and generating a first layout drawing of the MLPE devices, based on the location information and the identification information.

In addition, other methods and systems for implementing the present disclosure, and a computer-readable recording medium having recorded thereon a computer program for executing the methods may be further provided.

Other aspects, features, advantages other than those described above will become apparent from the following drawings, claims, and detailed description of the present disclosure.

### Advantageous Effects

According to the present disclosure, it is possible to easily manage a plurality of pieces of identification information by recognizing identification information of a plurality of module-level power electronics (MLPE) devices.

In addition, by generating a layout drawing based on location information of photovoltaic modules corresponding to a plurality of MLPE devices, the location information of the photovoltaic modules including the MLPE devices may be easily collected and managed.

In addition, by generating a guide template that includes an arrangement plan for a plurality of photovoltaic modules or MLPE devices to output an optimal amount of power generation, it is possible to minimize work mistakes by an installer and support efficient installation.

In addition, it is possible to generate a more accurate mapping result in which in-situ conditions is actually reflected, by obtaining direction information from an image including a state in which a plurality of photovoltaic modules are installed, and rotating a layout drawing.

In addition, it is possible to optimize a layout drawing while maintaining visual consistency by rotating, in correspondence to direction information, a layout drawing excluding text containing identification information to generate a modified layout drawing.

In addition, when identification information of an MLPE device is lost or cannot be recognized, the identification information may be substituted by recognizing identification information of a photovoltaic module, and thus, convenience of use may be improved.

Effects of the present disclosure are not limited to the foregoing, and other unmentioned effects would be clearly understood by those skilled in the art from the following description.

### Description of Drawings

FIG. 1 is a block diagram schematically illustrating a configuration of a device for automatically mapping an inverter of a photovoltaic module, according to an embodiment.
FIG. 2 is a flowchart of a method of automatically mapping an inverter of a photovoltaic module, according to an embodiment.
FIGS. 3 to 6 are diagrams illustrating examples of automatically mapping a photovoltaic module with an inverter, according to an embodiment.

### Mode for Invention

Advantages and features of the present disclosure and a method for achieving them will be apparent with reference to embodiments of the present disclosure described below together with the accompanying drawings. The present disclosure may, however, be embodied in many different forms and should not be construed as being limited to the embodiments set forth herein, and all changes, equivalents, and substitutes that do not depart from the spirit and technical scope of the present disclosure are encompassed in the present disclosure. These embodiments are provided such that the present disclosure will be thorough and complete, and will fully convey the concept of the present disclosure to those of skill in the art. In describing the present disclosure, detailed explanations of the related art are omitted when it is deemed that they may unnecessarily obscure the gist of the present disclosure.

Terms used herein are for describing particular embodiments and are not intended to limit the scope of the present disclosure. The singular expression also includes the plural meaning as long as it does not inconsistent with the context. In the present specification, it is to be understood that the terms such as "including," "having," and "comprising" are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added. Terms such as "first" or "second" may be used to describe various elements, but the elements should not be limited by the terms. These terms are used only to distinguish one element from another.

In addition, as used herein, the term "unit" may be a hardware component such as a processor or a circuit, and/or a software component executed by a hardware component such as a processor.

Hereinafter, embodiments of the present disclosure are described in detail with reference to the accompanying drawings, and the same or corresponding components are denoted by the same reference numerals when described with reference to the accompanying drawings, and thus, redundant descriptions thereof are omitted.

In the following embodiments, terms such as "first," "second," etc., are used only to distinguish one component from another, and such components must not be limited by these terms.

In the following embodiments, the singular expression also includes the plural meaning as long as it is not inconsistent with the context.

In the following embodiments, the terms "comprises," "includes," "has", and the like used herein specify the presence of stated features or components, but do not preclude the presence or addition of one or more other features or components.

When a certain embodiment may be differently implemented, particular operations may be performed differently from the sequence described herein. For example, two processes, which are successively described herein, may be substantially simultaneously performed, or may be performed in a process sequence opposite to a described process sequence.

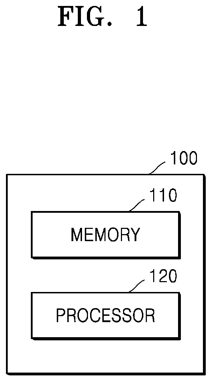

FIG. 1 is a block diagram schematically illustrating a configuration of a device for automatically mapping an inverter of a photovoltaic module, according to an embodiment. Referring to FIG. 1, a device 100 for automatically mapping an inverter of a photovoltaic module (hereinafter, referred to as the device 100) may include a memory 110 and a processor 120.

FIG. 1 illustrates only components of the device 100 that are related to the present embodiments, and thus, it is apparent to those skilled in the art that other general-purpose components may be further included in addition to the components illustrated in FIG. 1.

For example, the device 100 may be implemented as various types of devices, such as notebook personal computers (PCs), desktop PCs, laptops, tablet computers, mobile devices including smart phones, server devices, or embedded devices. As a specific example, the device 100 may correspond to, but is not limited to, a smart phone, a tablet device, an augmented reality (AR) device, an Internet-of-Things (IoT) device, a self-driving car, and the like capable of performing speech recognition, image recognition, image classification, and the like by using artificial intelligence. Furthermore, the device 100 may include, but is not limited to, a dedicated hardware accelerator to be mounted on the devices described above, and the device 100 may include a hardware accelerator such as a neural processing unit (NPU), a tensor processing unit (TPU), or a neural engine, which is a dedicated module for performing artificial intelligence.

The memory 110 is hardware that stores various types of data processed inside the device 100, and may include a computer-readable recording medium. For example, the memory 110 may store data that has been processed by the device 100, and data to be processed. In addition, the memory 110 may store applications, drivers, and the like to be executed by the device 100. The memory 110 may include at least one of a volatile memory and a nonvolatile memory. The volatile memory may include dynamic random-access memory (DRAM), static random-access memory (SRAM), synchronous dynamic random-access memory (SDRAM), phase-change random-access memory (PRAM), magnetic random-access memory (MRAM), resistive random-access memory (RRAM), ferroelectric random-access memory (FeRAM), and the like. The nonvolatile memory may include read-only memory (ROM), programmable read-only memory (PROM), electrically programmable read-only memory (EPROM), electrically erasable programmable read-only memory (EEPROM), and the like.

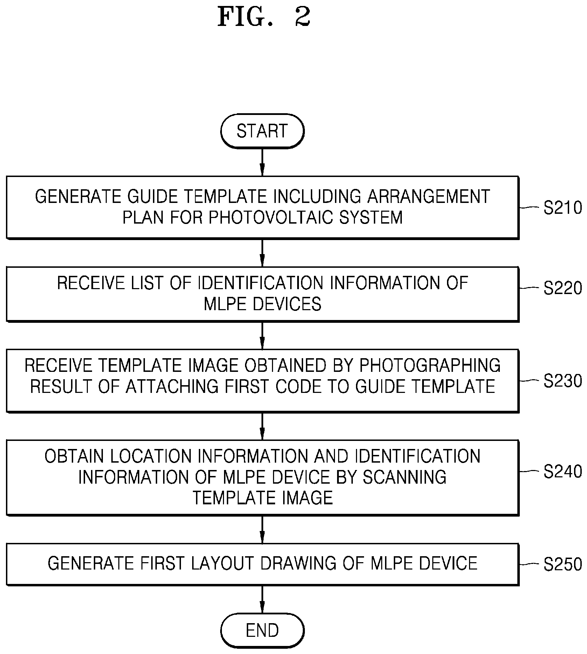

In an embodiment, the memory 110 may include, but is not limited to, magnetic memory, a compact disc (CD)-ROM (CD-ROM), a Blu-ray or other optical disk storage, a hard disk drive (HDD), a solid-state drive (SSD), CompactFlash (CF), Secure Digital (SD), microSD, miniSD, eXtreme Digital (XD), or Memory Stick. In addition, the memory 110 may store an operating system and at least one piece of program code (code for the processor 120 to perform an operation to be described below with reference to FIGS. 2 to 6).

The processor 120 may serve to control the overall function for executing the device 100 with reference to FIGS. 2 to 6. For example, the processor 120 may execute software (e.g., a program) stored in the memory 110 of the device 100 to control at least one of other components (e.g., a hardware or software component) of the electronic device, which is connected to the processor 120, and to control the overall operation of the device 100 by performing various types of data processing or computation.

For example, the processor 120 may generate a guide template including an arrangement plan for a photovoltaic system (not shown) to output an optimal amount of power generation, based on one or more of environmental conditions of a site where the photovoltaic system is to be installed, and the performance of the photovoltaic system. Based on receiving completion of installation of the photovoltaic system in correspondence to the guide template, the processor 120 may receive a list of identification information of module-level power electronics (MLPE) devices corresponding to a plurality of photovoltaic modules included in the photovoltaic system, respectively. The processor 120 may receive a template image obtained by photographing a result of attaching, to the guide template, a first code separated from an MLPE device. The processor 120 may obtain, from the template image, location information and identification information of the MLPE device corresponding to the first code. The processor 120 may generate a first layout drawing of the MLPE device based on the location information and the identification information.

In addition, the processor 120 may compare the number of pieces of identification information of MLPE devices in the list of identification information, with the number of pieces of identification information corresponding to a plurality of recognized first codes, and when they do not match, transmit an alarm, and recommend location information for an MLPE device corresponding to an unrecognized first code, on the first layout drawing. In addition, the processor 120 may modify the first layout drawing based on the recommended location information.

Meanwhile, the processor 120 may obtain direction information from the guide template image. The processor 120 may generate a second layout drawing by rotating the first layout drawing excluding identification information, based on the direction information.

According to an embodiment, the processor 120 may be implemented as a central processing unit (CPU), a graphics processing unit (GPU), an application processor (AP), a neural processing unit (NPU), an image signal processor (ISP), a sensor hub processor, or a communication processor (CP) provided in the device 100, but is not limited thereto.

FIG. 2 is a flowchart of a method of automatically mapping an inverter of a photovoltaic module, according to an embodiment. In the following description, redundant descriptions provided above with reference to FIG. 1 will be omitted.

A solar power generation system (not shown) according to the present embodiment may refer to a power generation system for converting solar energy into electric energy. The solar power generation system may include a plurality of photovoltaic (PV) modules, each of which may include an MLPE device (not shown) configured to optimize the amount of power generation and manage power conversion.

In the present embodiment, the MLPE device may be replaced by an optimizer or a microinverter. For example, in a case in which the MLPE device is an optimizer, the optimizer may regulate power produced by photovoltaic panels and output it to an inverter (e.g., a string inverter). A current converted (e.g., from a direct current to an alternating current) by the inverter may be output to a load or a grid. As another example, in a case in which the MLPE device is a microinverter, the microinverter may convert power generated by photovoltaic panels. A current converted by the microinverter may be output to a load or a grid.

The photovoltaic module is a module for generating electricity by using the photovoltaic effect, and a plurality of photovoltaic modules may be connected to each other to form a photovoltaic module array. The photovoltaic module array may include a plurality of photovoltaic modules connected to each other in series or parallel. In addition, the photovoltaic module array may include at least one photovoltaic module string. In a case in which a plurality of photovoltaic modules are connected to each other in series according to an embodiment, the plurality of photovoltaic modules may form a single photovoltaic module array through a single photovoltaic module string. In addition, in a case in which a plurality of photovoltaic modules are connected to each other in parallel according to an embodiment, the plurality of photovoltaic modules may form a single photovoltaic module array through a plurality of photovoltaic module strings.

Meanwhile, the MLPE devices may be connected to photovoltaic modules in a one-to-one manner, and may convert power generated by the photovoltaic modules, and optimize the amount of power generation.

The present embodiment will be described with reference to an example of a solar power generation system including at least one photovoltaic module array.

The solar power generation system may include a plurality of photovoltaic module arrays, and the photovoltaic module array may include at least one photovoltaic module string including a plurality of photovoltaic modules. Thus, each of the plurality of photovoltaic modules needs to be managed individually.

Accordingly, when installing or replacing a photovoltaic module to install a solar power generation system, a user may match identification information of the photovoltaic module or identification information of an MLPE device, with information about a location where the photovoltaic module or MLPE device is installed.

In operation S210, the processor 120 may generate a guide template including an arrangement plan for a photovoltaic system (not shown) to output an optimal amount of power generation, based on one or more of environmental conditions of a site where the photovoltaic system is to be installed, and the performance of the photovoltaic system.

In the present embodiment, the environmental conditions may include one or more of the location of a building for a site where the photovoltaic system is to be installed, the shape and size of a roof or rooftop of the building, the design of the building, a location where photovoltaic panels may be installed, and the angle of incidence of sunlight. In addition, the performance of the photovoltaic system may include one or more of the performance of the photovoltaic module and the performance of the MLPE device. The performance of the photovoltaic module may include one or more of performance indications of the photovoltaic module, including one or more of maximum power output, efficiency, and a temperature coefficient. The performance of the MLPE device may include one or more of maximum power output, efficiency, maximum tracking efficiency, and input/output voltage ranges. In the present embodiment, the environmental conditions and the performance of the photovoltaic system may be input by the installer or may be received by the processor 120 with the assistance of the installer.

In the present embodiment, when generating the guide template, the processor 120 may load an initial template composed of a plurality of grid areas. The processor 120 may extract a grid area of a location where an MLPE device is to be arranged, from the initial template in correspondence to the arrangement plan for the photovoltaic system. The processor 120 may determine, as the guide template, a result of combining one or more of the extracted grid areas. Here, the guide template may include a first code array board to which a first code to be described below is to be attached. The guide template may be printed in the form of a paper template.

Because the arrangement plan for the photovoltaic system is generated based on the environmental conditions and/or the performance of the photovoltaic system, the first code array board is not necessarily limited to a rectangular array, but may include various shapes such as a circular array or a polygonal array. By generating the guide template, the user (or the installer) only needs to attach a first code to the corresponding array board, and thus, mistakes by the user (or the installer) may be minimized.

In an alternative embodiment, the processor 120 may generate a guide template corresponding to at least one of the environmental conditions of the site where the photovoltaic system is to be installed and the performance of the photovoltaic system, by using a deep neural network model that is pretrained to generate a guide template including an arrangement plan for a photovoltaic system to output an optimal amount of power generation, based on at least one of the environmental conditions of a site where the photovoltaic system is to be installed and the performance of the photovoltaic system. Here, the deep neural network model may be a model trained in a supervised learning manner by using training data including, as inputs, the performance of a photovoltaic system including environmental conditions including one or more of the location of a building for a site where a photovoltaic system is to be installed, the shape and size of a roof or rooftop of the building, the design of the building, a location where photovoltaic panels may be installed, and the angle of incidence of sunlight, the performance of a photovoltaic module including one or more of performance indications of the photovoltaic module including one or more of maximum power output, efficiency, and a temperature coefficient, and the performance of an MLPE device including one or more of maximum power output, efficiency, maximum tracking efficiency, and input/output voltage ranges, and a guide template as a label.

The processor 120 may train an initially set deep neural network model by using labeled training data in a supervised learning manner. Here, the initially set deep neural network model is an initial model designed to be configured as a model capable of generating a guide template in correspondence to at least one of environmental information and the performance of a photovoltaic system, and its parameter values may have been set to arbitrary initial values. The initial model may be trained by using the training data described above such that the parameter values are optimized, in to a generative model capable of accurately generating a guide template in correspondence to one or more of environmental information and the performance of a photovoltaic system.

In operation S220, based on receiving completion of installation of the photovoltaic system in correspondence to the guide template, the processor 120 may receive a list of identification information of MLPE devices corresponding to a plurality of photovoltaic modules included in the photovoltaic system, respectively.

A solar power generation system may include a plurality of photovoltaic modules, and MLPE devices may correspond to a photovoltaic module in a one-to-one manner.

The list of identification information may refer to a list containing identification information of MLPE devices installed in the solar power generation system. The identification information of the MLPE device may include a serial number that is set when the MLPE device is manufactured or shipped. In addition, according to an embodiment, the identification information of the MLPE device may include an address, a product number, and the like assigned to the MLPE device. The identification information of the MLPE device may include a combination of letters, numbers, or symbols. In addition, the identification information of the MLPE device may be set to indicate regularities according to the installation location or arrangement structure of the MLPE device.

In operation S230, the processor 120 may receive a template image obtained by photographing a result of attaching, to the guide template, a first code separated from an MLPE device.

The template image including the first code may include a plurality of zones, each of which may be used to indicate location information and identification information of an MLPE device.

The first code may be in the form of a one-dimensional code or a two-dimensional code. A one-dimensional (1D) barcode is a code made up of lines, and may include a code that represents information horizontally. A two-dimensional (2D) barcode is in the shape of a square or a rectangle, and may include a code that represents information horizontally and vertically.

According to an embodiment, the first code may include a Quick Response (QR) code from among forms of two-dimensional codes, and the QR code may be used to indicate identification information of an MLPE device. Thus, the first code may include identification information of an MLPE device, such as a serial number or a product number, and the processor 120 may obtain identification information of the MLPE device corresponding to the first code by recognizing or scanning the first code.

Meanwhile, the first code is not limited to two-dimensional codes, and may be a one-dimensional code such as a barcode or another form of identifier code, but hereinafter, for convenience of description, the first code will be described below as a QR code.

The processor 120 may obtain the template image including the first code by a process of photographing or scanning according to an embodiment, and may also obtain the template image through a direct input from the user according to another embodiment.

In the present embodiment, because the guide template is not limited to a rectangular array board, and may be generated as an array board in any one of various shapes, the scanning applied when generating the template image does not need to be performed in a set order as in the conventional snake mapping. That is, a first code may be freely attached onto the guide template, and scanning may be performed every time a first code is attached.

When installing an MLPE device, the user (or the installer) may remove a first code attached to the MLPE device, and attach the removed first code to a designated zone in the guide template. Thus, the template image including the first code may include a photographic form of the guide template to which the first code is attached. The template image according to the present embodiment may include a form that may include location information and identification information, rather than a physical photograph in the strict sense.

In operation S240, the processor 120 may obtain, from the template image, location information and identification information of the MLPE device corresponding to the first code.

The processor 120 may identify, from an input template image, coordinate information of the zone to which the first code is attached, and obtain location information of the MLPE device by using the coordinate information.

In an embodiment, when the first code is attached to a plurality of zones due to the user's mistake, or is recognized as being attached to a plurality of zones due to misrecognition by the processor 120, a plurality of pieces of coordinate information of the zones to which the first code is attached may be identified. In this case, the processor 120 may calculate and compare the area of the first code included in each zone, and match coordinate information of the zone with the largest area of the first code, with the location information of the first code.

When the processor 120 recognizes that no first code is attached to a zone, the processor 120 may recognize that no MLPE device is installed at a location corresponding to the zone.

In operation S250, the processor 120 may generate a first layout drawing of the MLPE device based on the location information and the identification information. The processor 120 may output the generated first layout drawing to a user terminal.

The processor 120 may receive an input of a template image including a first code through an application (app), generate a first layout drawing of an MLPE device by using the application, and output the first layout drawing of the MLPE device to a user terminal.

According to an embodiment, the processor 120 may arrange the first code in the first layout drawing to correspond to location information, and arrange, in addition to the first code, identification information of the MLPE device or real-time power generation information of a photovoltaic module corresponding to the MLPE device. The processor 120 may receive power generation information through a controller that may be attached to or connected to the photovoltaic module to control or monitor a photovoltaic panel. Here, the power generation information may include the voltage, current, amount of power generation, temperature, defects, and the like of the photovoltaic module, and the controller may include a communication module capable of transmitting monitored information to an external device.

According to an embodiment, when the processor 120 generates a first layout drawing by arranging the first code, the user may check the arrangement state of the MLPE device through the first layout drawing in an application of the user terminal, and by touching the first code on the first layout drawing, check detailed information about the status or power generation information of the MLPE device and the photovoltaic module corresponding to the first code.

According to another embodiment, when the processor 120 generates a first layout drawing by arranging real-time power generation information, the user may check the arrangement state of the MLPE device through the first layout drawing in the application of the user terminal, and check the state or power generation information of the photovoltaic module corresponding to the MLPE device at a glance in a simplified form.

The user may change the location of the first code in the first layout drawing by using drag and drop, and the processor 120 may generate a first layout drawing by reflecting location information of the MLPE device changed by the user's drag-and-drop input.

In detail, the processor 120 may receive a drag-and-drop input for location information of an MLPE device. In response to receiving the drag-and-drop input, the processor 120 may change the location information of the MLPE device. The processor 120 may reflect a result of changing the location information of the MLPE device, in the first layout drawing.

In an alternative embodiment, the processor 120 may compare the number of pieces of identification information of MLPE devices in the list of identification information, with the number of pieces of identification information corresponding to a plurality of recognized first codes, and when they do not match, transmit an alarm, and recommend location information for an MLPE device corresponding to an unrecognized first code, on the first layout drawing.

In detail, the processor 120 may compare the number of pieces of identification information of MLPE devices in the list of identification information of MLPE devices received in operation S220, with the number of pieces of identification information of first codes recognized in operation S240. Cases in which a result of the comparing indicates that they do not match may include a case in which a first code is not recognized by the processor 120, or a case in which a first code has not been attached due to a mistake by the user (or the installer). In this case, the processor 120 may transmit, to the user, an alarm for the first code that has not been recognized or attached, and recommend, to the user, location information for an MLPE device corresponding to the first code that has not been recognized or attached.

The processor 120 may calculate location information that requires a first code corresponding thereto, based on the guide template generated in operation S210. For example, when there is first location information that requires a first code corresponding thereto, but does not have such first code, the processor 120 may recommend the first location information as location information of an MLPE device corresponding to an unrecognized or unattached first code.

When there is one unrecognized or unattached first code, the processor 120 may omit the process of transmitting an alarm and recommending location information for the unrecognized or unattached first code, and then input the first location information to the location information of an MLPE device corresponding to the unrecognized or unattached first code. In addition, the processor 120 may output, to the user terminal, a first layout drawing generated based on the input first location information, and express that the first location information has been input for the first code, by applying a different color, blinking, emphasis, or the like to the unrecognized or unattached first code on the first layout drawing.

When there are two or more unrecognized or unattached first codes, there may be a plurality of pieces of first location information that require first codes corresponding thereto but do not have such first codes, and the processor 120 may recommend, to the user, the plurality of pieces of first location information, for location information of MLPE devices corresponding to the unrecognized or unattached first codes, and input the first location information selected by the user, as location information of the MLPE devices. When there is any one piece of first location information that has not been selected by the user, the processor 120 may generate a first layout drawing by inputting the first location information to a first code for which no location information has been input, without the user's selection.

In an alternative embodiment, the processor 120 may obtain direction information from a guide template image, and generate a second layout drawing by rotating the first layout drawing excluding the identification information, based on the direction information. Here, the direction information may include one or more of a tilt angle and an azimuth angle.

A template image including first codes may include a direction marker or a direction identifier representing direction information. In addition, the template image may include direction information in the form of text input by the user (or the installer). The processor 120 may obtain direction information based on a direction marker or a direction identifier, or direction information in the form of text input by the installer. For example, when a paper template including a four-direction marker at an upper left portion thereof is provided, the processor 120 may modify, based on the four-direction marker, the angle of a template image that includes the first code and is in the form of a photograph of the paper template, and generate a second layout drawing by rotating the first layout drawing based on the modified angle.

According to an embodiment, the processor 120 may detect identification information by applying a text recognition algorithm to the first layout drawing. The processor 120 may rotate the first layout drawing based on the direction information, and determine, as a second layout drawing, a result of excluding rotation of the identification information when rotating the first layout drawing.

In the present embodiment, the first code included in the first layout drawing may include an icon and identification information. The icon may represent an image that is a substitution of the first code, and the identification information may represent a serial number text. In addition, rotating the first layout drawing may include rotating components other than the identification information representing the serial number text, based on the direction information.

In the present embodiment, the processor 120 may apply, to the second layout drawing, a result of aligning the output direction of the identification information in one direction. Here, aligning the output direction of the identification information in one direction may include aligning the identification information in the same direction as other text included in the template image, for example, 'Customer', 'Installer', 'Panel Group', 'Azimuth', and 'Tilt'.

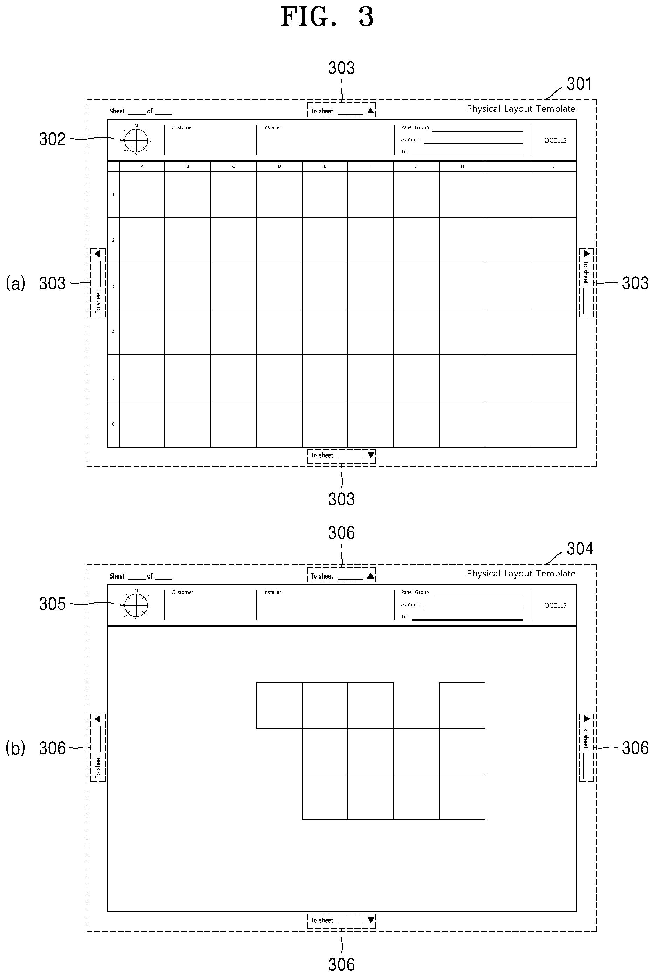

FIG. 3 is a diagram illustrating examples of an initial template and a guide template according to an embodiment. In the following description, redundant descriptions provided above with reference to FIGS. 1 and 2 will be omitted.

Referring to FIG. 3, (a) of FIG. 3 illustrates a paper template 301 to which a plurality of first codes are to be attached, and may include a plurality of grid areas. For example, the plurality of grid areas may be configured in the form of a table, and rows in the table may be represented by numeric indices such as 1, 2, 3, ..., and columns in the table may be represented by alphabet indices such as A, B, C, .... Thus, in this case, any cell in the table may be represented by using a row index and a column index, and the area at the first row and the first column in the table may be represented by A1.

(b) of FIG. 3 illustrates a guide template 304 to which a plurality of first codes are to be attached, and may include an arrangement plan for a photovoltaic system to output an optimal amount of power generation, based on at least one of the environmental conditions of a site where the photovoltaic system is to be installed, and the performance of the photovoltaic system.

Comparing (a) of FIG. 3 with (b) of FIG. 3, the initial template illustrated in (a) of FIG. 3 includes a rectangular array, and a plurality of grid areas included in the rectangular array may include areas to which first codes are to be attached, and areas to which no first code is to be attached. On the other hand, the guide template illustrated in (b) of FIG. 3 includes various shapes such as a circular array or a polygonal array, and the plurality of grid areas may include only areas to which first codes are to be attached.

The difference between (a) of FIG. 3 and (b) of FIG. 3 is that (a) of FIG. 3 includes areas to which first codes are to be attached, and areas to which no first code is to be attached, which may cause the user (or the installer) to make the mistake of attaching a first code to the area to which no first code is to be attached. However, (b) of FIG. 3 includes only areas to which first codes are to be attached, which may minimize mistakes by the user (or the installer).

In addition, (a) of FIG. 3 and (b) of FIG. 3 may include direction markers 302 and 305, or direction identifiers 303 and 306 for indicating direction information. The processor 120 according to the present embodiment may obtain direction information based on the direction marker 305, the direction identifier 306, or a direction information-related text that is input to the guide template 304 by the user (or the installer).

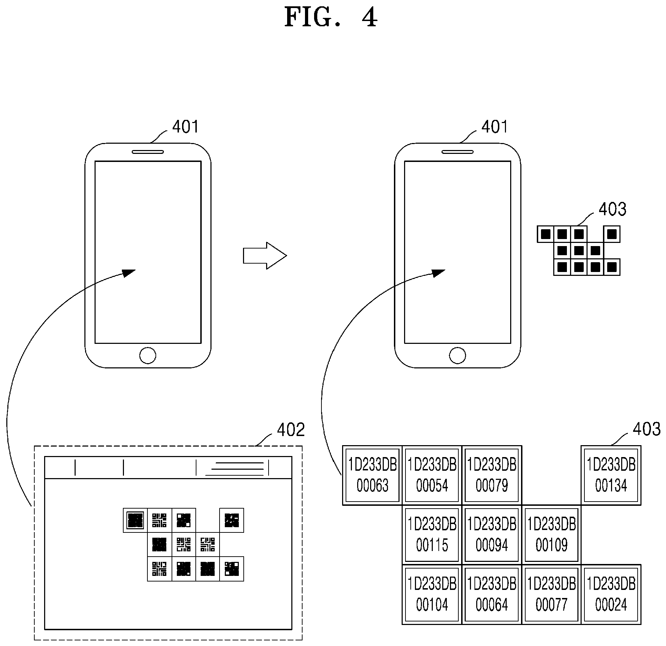

FIG. 4 is a diagram illustrating an example of a process of recognizing a template image and outputting a first layout drawing, according to an embodiment. In the following description, redundant descriptions provided above with reference to FIGS. 1 to 3 will be omitted.

Referring to FIG. 4, the processor 120 may receive a template image 402 including first codes, from a user of a user terminal 401. In detail, the processor 120 may receive the template image 402 including the first codes, from the user through an application in the user terminal 401. According to an embodiment, the application in the user terminal 401 may be displayed on a display interface of the user terminal 401, and an icon corresponding to a function of receiving or capturing an image may be displayed on a user interface of the application displayed on the user terminal 401. For example, the user may touch a photo album icon corresponding to a function of receiving an input of an image, to input the template image 402 including a plurality of first codes to the user terminal 401, and the user terminal 401 may display images stored therein. When the user selects the template image 402 including the first codes from among the displayed images, the processor 120 may obtain the template image 402 including the plurality of first codes and selected by the user. In another embodiment, the user may touch a camera icon corresponding to a function of capturing an image, to photograph a guide template including a plurality of first codes by using the user terminal 401, and the user terminal 401 may photograph, with its internal camera, the guide template including the plurality of first codes to obtain the template image 402 including the plurality of first codes.

When the processor 120 obtains the template image 402 including the plurality of first codes, the processor 120 may recognize the first codes and obtain location information and identification information of MLPE devices corresponding to the first codes. The processor 120 may generate a first layout drawing 403 of the MLPE devices based on the obtained location information and identification information, and output the first layout drawing 403 of the MLPE devices on the user interface of the application in the user terminal 401. In the present embodiment, the first layout drawing 403 may include icons representing images that are substitutions of the first codes, and identification information representing serial number text.

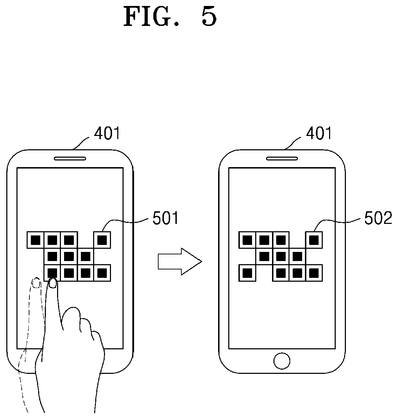

FIG. 5 is a diagram of an example of a process for changing location information of an MLPE device, according to an embodiment. In the following description, redundant descriptions provided above with reference to FIGS. 1 to 4 will be omitted.

Referring to FIG. 5, for a first layout drawing 501 generated by the processor 120 and output on the user terminal 401, a result 502 of changing the location of a first code included in the first layout drawing 501 by receiving a drag-and-drop input from the user may be generated.

In detail, the processor 120 may receive a drag-and-drop input for location information of an MLPE device. In response to receiving the drag-and-drop input, the processor 120 may change the location information of the MLPE device. The processor 120 may reflect a result of changing the location information of the MLPE device, in the first layout drawing 501, and output the result 502.

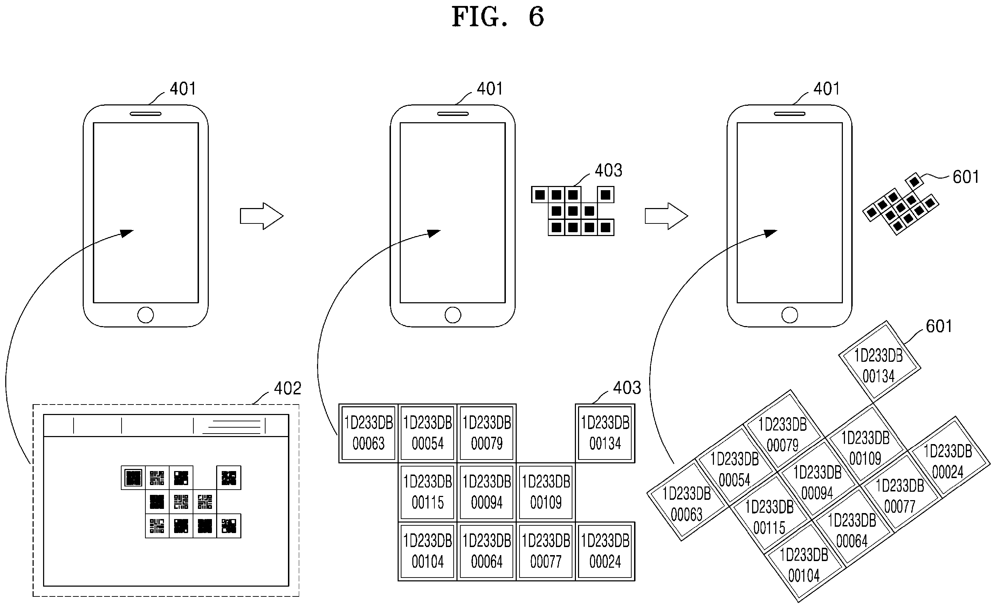

FIG. 6 is a diagram illustrating an example of a process of generating a second layout drawing based on direction information, according to an embodiment. In the following description, redundant descriptions provided above with reference to FIGS. 1 to 5 will be omitted.

Referring to FIG. 6, the processor 120 may receive the template image 402 including a plurality of first codes, from the user of the user terminal 401. When the processor 120 obtains the template image 402 including the plurality of first codes, the processor 120 may recognize the first codes and obtain location information and identification information of MLPE devices corresponding to the first codes. The processor 120 may generate the first layout drawing 403 of the MLPE devices based on the obtained location information and identification information, and output the first layout drawing 403 of the MLPE devices on the user interface of the application in the user terminal 401. In the present embodiment, the first layout drawing 403 may include icons representing images that are substitutions of the first codes, and identification information representing serial number text.

In addition, the processor 120 may generate a second layout drawing 601 by rotating the first layout drawing 403 excluding the identification information, based on obtained direction information.

The template image including the first codes may include a direction marker or a direction identifier representing direction information. In addition, the template image may include direction information in the form of text input by the user (or the installer). The processor 120 may obtain direction information based on a direction marker or a direction identifier, or direction information in the form of text input by the installer.

The processor 120 may detect identification information by applying a text recognition algorithm to the first layout drawing 403. The processor 120 may rotate the first layout drawing 403 based on the direction information, and determine, as the second layout drawing 601, a result of excluding rotation of the identification information when rotating the first layout drawing 403.

The processor 120 may apply, to the second layout drawing 601, a result of aligning the output direction of the identification information in one direction. Here, aligning the output direction of the identification information in one direction may include aligning the identification information in the same direction as other text included in the template image, for example, 'Customer', 'Installer', 'Panel Group', 'Azimuth', and 'Tilt'.

The embodiments of the present disclosure described above may be implemented as a computer program that may be executed through various components on a computer, and such a computer program may be recorded in a computer-readable medium. In this case, the medium may include a magnetic medium, such as a hard disk, a floppy disk, or a magnetic tape, an optical recording medium, such as a compact disc ROM (CD-ROM) or a digital video disc (DVD), a magneto-optical medium, such as a floptical disk, and a hardware device specially configured to store and execute program instructions, such as ROM, RAM, or flash memory.

Meanwhile, the computer program may be specially designed and configured for the present disclosure or may be well-known to and usable by those skilled in the art of computer software. Examples of the computer program may include not only machine code, such as code made by a compiler, but also high-level language code that is executable by a computer by using an interpreter or the like.

The term 'the' and other demonstratives similar thereto in the specification of the present disclosure (especially in the following claims) should be understood to include a singular form and plural forms. Furthermore, recitation of ranges of values herein are merely intended to serve as a shorthand method of referring individually to each separate value falling within the range, unless otherwise indicated herein, and each separate value is incorporated into the specification as if it were individually recited herein.

The operations of the methods according to the present disclosure may be performed in any suitable order unless otherwise indicated herein or otherwise clearly contradicted by context. The present disclosure is not limited to the described order of the operations. The use of any and all examples, or exemplary language (e.g., 'and the like') provided herein, is intended merely to better illuminate the present disclosure and does not pose a limitation on the scope of the present disclosure unless otherwise claimed. Also, numerous modifications and adaptations will be readily apparent to those skilled in the art without departing from the spirit and scope of the present disclosure.

Accordingly, the spirit of the present disclosure should not be limited to the above-described embodiments, and all modifications and variations which may be derived from the meanings, scopes and equivalents of the claims should be construed as failing within the scope of the present disclosure.

## Claims

1. A method, performed by a processor of a device for automatically mapping an inverter of a photovoltaic module, of automatically mapping an inverter of a photovoltaic module, the method comprising:
generating a guide template comprising an arrangement plan for a photovoltaic system to output an optimal amount of power generation, based on at least one of: environmental conditions of a site where the photovoltaic system is to be installed or performance of the photovoltaic system;
based on receiving completion of installation of the photovoltaic system in correspondence to the guide template, receiving a list of identification information of module-level power electronics (MLPE) devices corresponding to a plurality of photovoltaic modules included in the photovoltaic system, respectively;
receiving a template image obtained by photographing a result of attaching, to the guide template, first codes separated from the MLPE devices;
obtaining, from the template image, location information and identification information of the MLPE devices corresponding to the first codes; and
generating a first layout drawing of the MLPE devices, based on the location information and the identification information.

2. The method of claim 1, wherein the generating of the guide template comprises:
loading an initial template comprising a plurality of grid areas;
extracting grid areas of locations where the MLPE devices are to be arranged, from the initial template in correspondence to the arrangement plan for the photovoltaic system; and
determining, as the guide template, a result of combining one or more of the extracted grid areas.

3. The method of claim 1, wherein the obtaining of the location information and the identification information of the MLPE devices comprises recognizing the first codes included in the template image, identifying coordinate information of zones to which the first codes are attached, and obtaining the location information of the devices by using the coordinate information.

4. The method of claim 1, wherein the generating of the first layout drawing comprises:
receiving a drag-and-drop input for the location information of the MLPE device;
in response to receiving the drag-and-drop input, changing the location information of the MLPE device; and
reflecting, on the first layout drawing, a result of changing the location information of the MLPE device.

5. The method of claim 1, further comprising, after the generating of the first layout drawing:
obtaining direction information from the template image; and
generating a second layout drawing by rotating, based on the direction information, the first layout drawing excluding the identification information.

6. The method of claim 5, wherein the obtaining of the direction information comprises obtaining the direction information based on one or more of a direction marker, a direction identifier, and a text that is input by an installer, which are included in the template image.

7. The method of claim 5, wherein the generating of the second layout drawing comprises:
detecting the identification information by applying a text recognition algorithm to the first layout drawing; and
rotating the first layout drawing based on the direction information and determining, as the second layout drawing, a result of excluding rotation of the identification information based on the rotation of the first layout drawing.

8. The method of claim 7, wherein the determining as the second layout drawing further comprises applying, to the second layout drawing, a result of aligning an output direction of the identification information in one direction.

9. A computer-readable recording medium having recorded thereon a computer program for causing a computer to execute the method of claim 1.

10. A device for automatically mapping an inverter of a photovoltaic module, the device comprising:
at least one processor; and
at least one memory,
wherein the at least one processor is configured to generate a guide template comprising an arrangement plan for a photovoltaic system to output an optimal amount of power generation, based on at least one of: environmental conditions of a site where the photovoltaic system is to be installed or performance of the photovoltaic system, based on receiving completion of installation of the photovoltaic system in correspondence to the guide template, receive a list of identification information of module-level power electronics (MLPE) devices corresponding to a plurality of photovoltaic modules included in the photovoltaic system, respectively, receive a template image comprising a result of attaching, to the guide template, first codes separated from the MLPE devices, obtain, from the template image, location information and identification information of the MLPE devices corresponding to the first codes, and generate a first layout drawing of the MLPE devices, based on the location information and the identification information.

11. The device of claim 10, wherein the at least one processor is further configured to, based on the generating of the guide template, load an initial template comprising a plurality of grid areas, extract grid areas of locations where the MLPE devices are to be arranged, from the initial template in correspondence to the arrangement plan for the photovoltaic system, and determine, as the guide template, a result of combining one or more of the extracted grid areas.

12. The device of claim 10, wherein the at least one processor is further configured to, based on the obtaining of the location information and the identification information of the MLPE devices, recognize the first codes included in the template image, identify coordinate information of zones to which the first codes are attached, and obtain the location information of the MLPE devices by using the coordinate information.

13. The device of claim 10, wherein the at least one processor is further configured to, based on the generating of the first layout drawing, receive a drag-and-drop input for the location information of the MLPE device, in response to receiving the drag-and-drop input, change the location information of the MLPE device, and reflect, on the first layout drawing, a result of changing the location information of the MLPE device.

14. The device of claim 10, wherein the at least one processor is further configured to, after generating the first layout drawing, obtain direction information from the template image, and generate a second layout drawing by rotating, based on the direction information, the first layout drawing excluding the identification information.

15. The device of claim 14, wherein the at least one processor is further configured to obtain the direction information based on one or more of a direction marker, a direction identifier, and a text that is input by an installer, which are included in the template image.

16. The device of claim 14, wherein the at least one processor is further configured to, based on the generating of the second layout drawing, detect the identification information by applying a text recognition algorithm to the first layout drawing, rotate the first layout drawing based on the direction information, and determine, as the second layout drawing, a result of excluding rotation of the identification information based on the rotation of the first layout drawing.

17. The device of claim 16, wherein the at least one processor is further configured to, based on the determining of the second layout drawing, apply, to the second layout drawing, a result of aligning an output direction of the identification information in one direction.
